# EUROPÄISCHE PATENTSCHRIFT

(11) **EP 0 949 501 B1**
(45) Veröffentlichungstag und Bekanntmachung des Hinweises auf die Patenterteilung: **13.07.2005**
(21) Anmeldenummer: 99103663.3
(22) Anmeldetag: 25.02.1999
(51) Int. Cl.: G01N 21/15, G01J 5/04, G01J 5/00, G02B 23/16

(54) **Schutzgehäuse für Beobachtungsgeräte**
Protective housing for observation devices
Boîtier de protection pour instruments d'observation

(30) Priorität: 09.04.1998 DE 19815975
(43) Veröffentlichungstag der Anmeldung: 13.10.1999
(73) Patentinhaber: Sobotta GmbH Sondermaschinenbau, D-53819 Neunkirchen-Seelscheid (DE)
(72) Erfinder: Möllenhoff, Horst Dr., 45470 Mülheim (DE); Rüben, Wilhelm, 47800 Krefeld (DE); Dohmann, Joachim Dr., 46149 Oberhausen (DE); Sobotta, Kurt S., 53819 Neunkirchen-Seelscheid (DE)
(74) Vertreter: Radünz, Ingo, Dipl.-Ing.

(56) Entgegenhaltungen:
- DE-A- 3 436 651
- DE-U- 7 501 261
- GB-A- 2 127 174

## Beschreibung

Die Erfindung betrifft ein Schutzgehäuse für Beobachtungsgeräte zur Überwachung von staubbelasteten Räumen mit den Merkmalen des Oberbegriffes des Anspruches 1.

Bekannte Schutzgehäuse für elektronische Sensoren, wie CCD-Kameras, Infrarot-Kameras und andere Beobachtungsgeräte (GASWÄRME International 46 (1997), Heft 10, Seiten 479 - 483) in staubbelasteten Räumen, wie Feuerräumen von Verbrennungsanlagen haben eine Spülluft-Durchflutung zum Zwecke der Kühlung der an der Spitze befindlichen Beobachtungsoptik. Diese Spülluft wird durch das Innere des Schutzgehäuses geleitet und tritt an der Spitze des Schutzgehäuses aus einem ca. 1 bis 4 mm großen Loch, Ausblicköffnung genannt, aus. Hierbei wird die Spülluft als Druckluft mit einem Druck zwischen 1 bis 1,5 bar in das Innere des Schutzgehäuses geführt. Dieser Überdruck wird außerdem dafür benötigt, die im Feuerraum befindlichen Staub- und Ascheteilchen nicht in das Innere des Schutzgehäuses gelangen zu lassen. Auf diese Weise wird erreicht, daß die Beobachtungsoptik des Beobachtungsgerätes mit der Frontlinse frei von Staub bleibt.

Der Nachteil der Schutzgehäuse ist, daß infolge des Unterdrucks an der Ausblicköffnung, der von dem austretenden Spülluftstrahl erzeugt wird, sich Feststoffteilchen ansammeln. Die Feststoffteilchen setzen die Ausblicköffnung je nach Feuerraumverhältnissen jeweils in etwa 8 bis 24 h zu, so daß nach diesem verhältnismäßig kurzen Zeitraum eine aufwendige Reinigung der Ausblicköffnung erfolgen muß. Erste Beeinträchtigungen treten zeitweise auch nach kürzerer Betriebsdauer ein. Zur Durchführung dieser Reinigungsarbeiten muß die Einrichtung demontiert werden. Dazu muß der Beobachtungsprozeß unterbrochen werden. Ferner kommt bei den häufig durchzuführenden Wartungsarbeiten noch die Gefahr einer Beschädigung der Frontlinse des Beobachtungsgerätes beim Reinigen der Ausblicköffnung hinzu.

Aus der DE-A-34 36 651 ist ein durch Druckluft gekühltes Gehäuse für eine Fernsehkamera zur Beobachtung eines Feuerraumes bekannt. Am vorderen Ende des Gehäuses befindet sich eine Ausblicköffnung und ein sich nach außen erweiternder Ausblicktrichter. Aus der Ausblicköffnung tritt ein Teilstrom der dem Gehäuse zugeführten Druckluft aus, um Schmutzteile und die Feuerraumatmosphäre fern zu halten. Durch das vordere Ende des Gehäuses sind weiterhin mehrere mit dem Inneren des Gehäuses in Verbindung stehende Bohrungen geführt. Die Bohrungen sind so angeordnet, dass die aus ihnen austretende Druckluft unter Bildung eines sich in Strömungsrichtung erweiternden Kegels an der Wand des Ausblicktrichters 5 entlang streicht und diese von Staubpartikeln freihält.

Aus der GB-A-2 127 174 ist ein Beobachtungsgerät bekannt, das in einem Gehäuse angeordnet ist. Der Innenraum des Gehäuses verjüngt sich zum Ende hin und bildet zusammen mit einem auf das Beobachtungsgerät aufgesetzten und eine Blendenöffnung aufweisenden Hohlkörper eine Ringdüse. Die Ringdüse steht mit einem Spülluft führenden Zwischenraum zwischen dem Beobachtungsgerät und dem Gehäuse in Verbindung. Im Bereich der Ringdüse geht die Außenseite des Hohlkörpers in die zylindrische Form über, so dass die Austrittsachse der Ringdüse im Wesentlichen axial verläuft. Der Hohlkörper ist stromabwärts von der Frontlinse des Beobachtungsgerätes mit Schlitzen versehen, durch die ein Teil der Spülluft mit Drall in das Innere des Hohlkörpers eintritt. Hierdurch entsteht ein aus der Blendenöffnung des Beobachtungsgerates austretender Spülluftstrahl, der von einem aus der Ringdüse austretenden Spülluftstrahl umhüllt wird. Auf diese Weise soll wie bei der Erfindung verhindert werden, dass sich Feststoffpartikel an der Blendenöffnung ablagern und zu Verschmutzungen führen können.

Der Erfindung liegt die Aufgabe zugrunde, das gattungsgemäße Schutzgehäuse auf eine andere Art so zu gestalten, daß die Ausblicköffnung über einen langen Zeitraum wirksam frei von Staub aus dem zu überwachenden, staubbelasteten Raum gehalten werden kann.

Diese Aufgabe wird erfindungsgemäß durch die Merkmale des Anspruches 1 gelöst. Vorteilhafte Ausgestaltungen der Erfindung sind Gegenstand der Unteransprüche.

Der Luftschleier, der durch die aus den Austrittskanälen austretende Spülluft gebildet wird, übt eine Sperrwirkung aus, die verhindert, daß Staubteilchen aus dem zu überwachenden, staubbelasteten Raum an die Ausblicköffnung gelangen können. Die Ausblicköffnung wird dadurch frei von Staub gehalten, so daß eine Reinigung des Schutzgehäuses erst nach einem langen Zeitraum vorgenommen werden muß.

Ein Ausführungsbeispiel der Erfindung ist in der Zeichnung dargestellt und wird im folgenden näher erläutert. Die Zeichnung zeigt den Längsschnitt durch ein Schutzgehäuse für ein Beobachtungsgerät.

Das Schutzgehäuse für ein Beobachtungsgerät besteht aus einem zylindrischen Mantel 1, der das nicht gezeichnete Beobachtungsgerät aufnimmt. Bei einem Einsatz in einem hohen Temperaturbereich von beispielsweise 1800 °C ist der Mantel 1 gekühlt und weist einen Innenmantel 2 und einen den Innenmantel 2 unter Bildung eines Ringraumes 3 mit einem Abstand zu dem umgebenden Außenmantel 4 auf. Der Außenmantel 4 ist mit einem Zulaufstutzen 5 und einem Ablaufstutzen 6 für die Zu- und Abführung eines Kühlmediums, z. B. Kühlwasser versehen, das den Ringraum 3 zwischen dem Innenmantel 2 und dem Außenmantel 4 durchströmt.

Für den wasserdichten Abschluß des gekühlten Mantels 1 ist an dem hinteren Ende des Mantels 1 ein Abschlußring 7 gefestigt. Auf den Abschlußring 7 ist entfernbar ein Abschlußdeckel 8 aufgeschraubt. Der Abschlußdeckel 8 weist eine zentrale, dicht verschließbare Öffnung 9 für die Durchführung der Zuleitungen des Beobachtungsgerätes auf. Der Abschlußdeckel 8 ist ferner mit einem Anschluß 10 für eine Zuführung von Spülluft versehen, die in den Innenraum des Schutzgehäuses eingeleitet wird. Als Spülluft wird Druckluft mit einer Druckdifferenz gegenüber dem zu beobachtenden Raum von 1 bis 1,5 bar verwendet.

In einer Ausführungsform ist das vordere, in den zu beobachtenden Raum hineinragende Ende des Mantels 1 des Schutzgehäuses als konisches Kopfteil 11 ausgebildet. Dieses Kopfteil 11 ist flüssigkeitsdicht mit dem Innenmantel 2 und dem Außenmantel 4 verbunden und in den Kühlkreislauf des Mantels 1 eingebunden. In einer anderen Ausführungsform schließt ein eben ausgeführtes Kopfteil plan mit der Wand des Beobachtungsraumes ab.

Das Kopfteil 11 ist mit einer mittigen Ausblicköffnung 12 versehen, die der Frontlinse der nicht dargestellten Beobachtungsoptik des Beobachtungsgerätes gegenüberliegt. Die Ausblicköffnung 12 ist zu dem zu beobachtenden Raum hin offen. Die in den Innenraum des Schutzgehäuses eingeleitete Spülluft tritt mit einem den Druck des zu beobachtenden Raumes übersteigenden Druck aus der Ausblicköffnung 12 in Richtung der Austrittsachse 13 aus. Auf diese Weise wird verhindert, daß staubbeladenes Gas aus dem zu beobachtenden Raum in das Schutzgehäuse eindringt. Andererseits würde aber auch ohne die nachfolgend beschriebenen Maßnahmen der aus der Ausblicköffnung 12 austretende Spülluftstrahl aus der Umgebung staubbeladenes Gas ansaugen, wodurch Feststoffteilchen an die Ausblicköffnung 12 gelangen und eine Verschmutzung herbeiführen können.

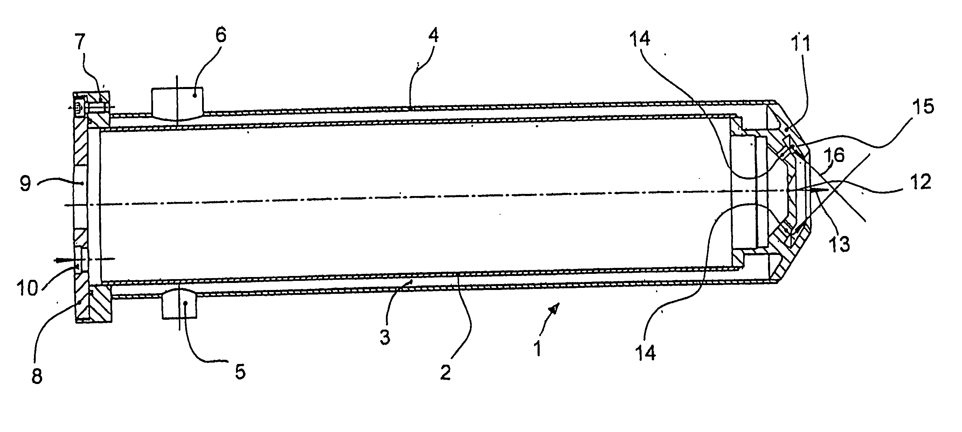

Um eine Verschmutzung der Ausblicköffnung 12 zu verhindern, ist das Kopfteil 11 in besonderer Weise strömungstechnisch ausgebildet. Hierzu sind bei der Ausführungsform gemäß Fig. 1 in dem Kopfteil 11 mehrere Bohrungen 14 angebracht, die auf einem Teilkreis angeordnet sind und in einen umlaufenden, ringförmigen Spalt 15 münden. Der Spalt 15 ist zu dem zu beobachtenden Raum hin offen, und sein offener Querschnitt befindet sich in der Umgebung der Ausblicköffnung 12. Der Spalt 15 bildet einen Austrittskanal, aus dem Spülluft in die Umgebung der Ausblicköffnung 12 austritt. Die Austrittsachse 16 des Spaltes 15 ist schräg auf die Austrittsachse 13 der Ausblicköffnung 12 gerichtet und schneidet diese in einem Abstand von der Ausblicköffnung 12. Im vorliegenden Fall schließt die Austrittsachse 16 des Spaltes 15 mit der Austrittsachse 13 der Ausblicköffnung 12 einen Winkel von 45° ein. Dieser Winkel kann auch kleiner als 45° sein. Die aus dem Spalt 15 austretende Spülluft bildet einen Luftschleier, der das staubbeladene Gas von der Ausblicköffnung 12 fernhält. Zusätzlich können die Bohrungen 14 zur Erzeugung einer Drallströmung in tangentialer Richtung geringfügig geneigt sein.

## Patentansprüche

1. Schutzgehäuse für Beobachtungsgeräte zur Überwachung von staubbelasteten Räumen bestehend aus einem zylindrischen Mantel (1), der das Beobachtungsgerät aufnimmt und der mit seinem vorderen, bis auf eine Ausblicköffnung (12) geschlossenen Ende in den zu beobachtenden Raum hineinragt, wobei das Schutzgehäuse mit einem Anschluß (10) für Spül- oder Kühlluft versehen ist, wobei die Ausblicköffnung (12) von dem zu überwachenden Raum durch einen Schleier aus aus einem Austrittskanal (15) austretender Spülluft getrennt ist und dieser Schleier die aus der Ausblicköffnung (12) austretende Spülluft umgibt, wobei das vordere Ende des Schutzgehäuses von mehreren Bohrungen (14) durchdrungen ist, **dadurch gekennzeichnet, daß** die Bohrungen in einen umlaufenden, den Austrittskanal bildenden Spalt (15) einmünden und daß die Austrittsachse (16) des Austrittskanals (15) schräg auf die Austrittsachse (13) der aus der Ausblicköffnung (12) austretenden Spülluft gerichtet ist und diese Austrittsachse (13) in einem axialen Abstand von der Ausblicköffnung (12) in Strömungsrichtung schneidet.

2. Schutzgehäuse nach Anspruch 1, **dadurch gekennzeichnet, daß** das vordere Ende des Schutzgehäuses konisch ausgebildet ist

3. Schutzgehäuse nach Anspruch 1 oder 2, **dadurch gekennzeichnet, daß** der Mantel (1) doppelwandig ausgebildet und von einem Kühlmedium durchflossen ist.

## Claims

1. Protective casing for observation units for monitoring dust-laden rooms comprising a cylindrical shell (1), which accommodates the observation unit and which with its front end, closed but for a viewing port (12), protrudes into the room to be monitored, wherein the protective casing is provided with a connection (10) for scavenging or cooling air, wherein viewing port (12) is separated from the monitored room by a veil of scavenging air leaving an outlet duct (15) and this veil surrounds the scavenging air leaving viewing port (12), wherem the front end of the protective casing is penetrated by several bores (14), **characterized in that** the bores end in a circumferential gap (15) forming the outlet duct and that outlet axis (16) of outlet duct (15) is inclined towards outlet axis (13) of the scavenging air leaving viewing port (12) and cuts said outlet axis (13) at an axial distance from viewing port (12) in flow direction.

2. Protective casing according to claim 1, **characterized in that** the front end of the protective casing has a conical form.

3. Protective casing according to claim 1 or 2, **characterized in that** shell (1) is double-walled and cooling fluid is flowing through this.

## Revendications

1. Boîtier de protection pour des appareils d'observation destinés au contrôle de locaux chargés en poussière comprenant une enveloppe (1) cylindrique, qui reçoit l'appareil d'observation et dépasse avec son extrémité avant, fermée à l'exception d'une ouverture de visée, dans le local à observer, le boîtier de protection étant doté d'un raccordement (10) pour l'air de lavage ou de refroidissement, l'ouverture de visée (12) étant séparée du local à observer par un voile constitué d'air de lavage sortant d'un canal de sortie (15) et ce voile entourant l'air de lavage sortant de l'ouverture de visée (12), l'extrémité avant du boîtier de protection étant traversée par plusieurs alésages (14), **caractérisé en ce que** les alésages débouchent dans une fente (15) périphérique et formant le canal de sortie et **en ce que** l'axe de sortie (16) du canal de sortie (15) est orienté en oblique sur l'axe de sortie (13) de l'air de lavage sortant de l'ouverture de visée (12) et coupe cet axe de sortie (13) à une distance axiale de l'ouverture de visée (12) dans le sens d'écoulement.

2. Boîtier de protection selon la revendication 1, **caractérisé en ce que** l'extrémité avant du boîtier de protection est conçue en forme de cône.

3. Boîtier de protection selon la revendication 1 ou 2, **caractérisé en ce que** l'enveloppe (1) est conçue avec une double paroi et est traversée par un fluide de refroidissement.
